# EUROPEAN PATENT APPLICATION

(11) **EP 4 578 759 A1**
(43) Date of publication of application: **02.07.2025**
(21) Application number: 23856949.5
(22) Date of filing: 22.06.2023
(51) Int. Cl.: B61L 25/02, B60L 3/00

(54) **LOCATION ESTIMATION SYSTEM AND LOCATION ESTIMATION METHOD**

(30) Priority: 26.08.2022 JP 2022135292
(71) Applicant: Hitachi, Ltd., Tokyo 100-8280 (JP)
(72) Inventor: TSUTSUMI, Yuhi, Tokyo 100-8280 (JP); IMAMOTO, Kenji, Tokyo 100-8280 (JP); SHIMIZU, Taku, Tokyo 100-8280 (JP); TAKAHASHI, Nao, Tokyo 100-8280 (JP)
(74) Representative: Mewburn Ellis LLP
(86) International application number: PCT/JP2023/023079
(87) International publication number: WO 2024/042832

(57) **Abstract**

It is an object of the present disclosure to provide a technology with which a position of a car can be accurately estimated. A typical one of position estimation systems of the present disclosure includes: a railway track information storage unit that stores a railway track information database containing a railway track shape at each spot in a railway track; a railway track shape measurement unit that, in a train running on the railway track, measures a railway track shape at least twice; a position measurement unit that measures a position of the train on a railway track; a section determination unit that determines a collation section in the railway track information database based on a position measured by the position measurement unit; and a railway track information collation unit that, in the collation section, collates a DB railway track shape, which is a railway track shape contained in the railway track information data base, with a measured railway track shape, which is a railway track shape measured by the railway track shape measurement unit and estimates a spot on the railway track corresponding to the collated railway track shape as a position of the train on a railway track.

## Description

### Technical Field

The present invention relates to a position estimation system and a position estimation method.

### Background Art

To implement obstacle detection and advanced train control, which are basic functions of automatic operation of such mobility as railways and automobiles, a subject car position must be accurately estimated. In the field of railway, for example, one of conventional methods is that a ground coil in which a precise absolute position is recorded is installed on a railway track and a position is corrected using transmit information from the ground coil. However, to install a ground coil on a railway track, a large burden is imposed in cost, including installation cost and maintenance cost.

Patent Literature 1 discloses a running position detection system for railway cars that is capable of detecting a running position of a subject car by comparing a shape of a curved portion through which a railway car passed immediately before and a shape of any curved portion among all the curved portions through which the railway car can pass. In this system, first, a passed curve information generation unit 40 generates passed curve information **R,** including a measured value such as a measured radius of curvature, each time a curved portion is passed through. A candidate curve information group generation unit 50A generates an individual candidate curve information group **G,** which is a set of pieces of candidate curve information K corresponding to all the curved portions that can be passed through. Subsequently, a concordance rate computation unit 60 computes a total concordance rate J that indicates how much passed curve information immediately before and passed curve information before immediately before match within a range from 0 to 1 with respect to the individual candidate curve information group G. Lastly, a curve determination unit 70 compares each total concordance rate J computed for each candidate curve information group G to determine a curved portion passed through immediately before.

### Citation List

### Patent Literature

Patent Literature 1: Japanese Unexamined Patent Application Publication No. 2015-095981

### Summary of Invention

### Technical Problem

A railway track may be laid sometimes with variation in shape suppressed and in such a case, a difference in railway track shape is difficult to detect with the method in Patent Literature 1 and accurate position estimation can be difficult. For this reason, a method with which a position can be accurately estimated even when a railway track shape does not vary so much and railway track shape matching is difficult is demanded.

Consequently, it is an object of the present invention to provide a technology with which a train position can be accurately estimated.

### Solution to Problem

To solve the above problem, a typical one of position estimation systems of the present invention includes: a railway track information storage unit that stores railway track information database containing a railway track shape at each spot in a railway track; a railway track shape measurement unit that measures a railway track shape at least twice in a train running on the railway track; a position measurement unit that measures a position of the train on a railway track; a section determination unit that determines a collation section in the railway track information database based on a position measured by the position measurement unit; and a railway track information collation unit that collates a DB railway track shape, which is a railway tack shape contained in the railway track information data base, with a measured railway track shape, which is a railway track shape measured by the railway track shape measurement unit, in the collation section and estimates a spot on the railway track corresponding to the collated railway track shape as a position on railway track of the train.

### Advantageous Effects of Invention

According to the present invention, a position of a train can be accurately estimated.

Other problems, configurations, and effects than described above will be apparent from the description related to the following embodiments to carry out the invention.

### Brief Description of Drawings

FIG. 1 is a drawing illustrating a position estimation system according to a first embodiment.
FIG. 2 is a drawing showing an example of a railway track information database.
FIG. 3 is a drawing schematically explaining a method for determining a collation section.
FIG. 4 is a drawing showing a method for estimating a position of a train using a railway track shape at the present spot of each car and a database of a collation section.
FIG. 5 is a drawing showing a flowchart of position estimation in the first embodiment.
FIG. 6 is a drawing showing an example of an estimation time when a position is estimated and a result of collation processing.
FIG. 7 is a drawing illustrating a position estimation system according to a second embodiment.
FIG. 8 is a drawing showing a method for chronologically performing measurement of a railway track shape and collation of a database.
FIG. 9 is a drawing showing an example of a railway track information database in a third embodiment.
FIG. 10 is a drawing showing a method for performing measurement of a railway track shape and collation of a database when a railway track information database contains consecutive data.

### Description of Embodiments

### First Embodiment

In relation to the first embodiment, a description will be given to a method for estimating a position of a train by performing measurement of a railway track shape and collation of a railway track information database at a plurality of spots.

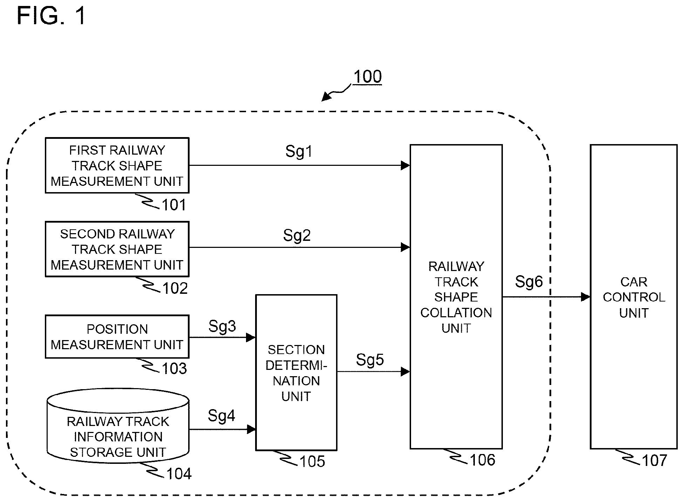

First, a description will be given to a configuration of a position estimation system and a role of each component with reference to FIG. 1.

### (System Configuration)

FIG. 1 is a drawing illustrating a position estimation system 100 according to the first embodiment. The position estimation system 100 according to the first embodiment includes a first railway track shape measurement unit 101 and a second railway track shape measurement unit 102, a position measurement unit 103, a railway track information storage unit 104, a section determination unit 105, and a railway track shape collation unit 106. The information of a position of a train estimated by the position estimation system 100 is outputted to a car control unit 107 and the car control unit 107 controls the train based on the position of the train.

The railway track shape measurement units 101 and 102 perform measurement of a railway track shape at least twice in a train running on a railway track. The railway track shape measurement units are installed in any of cars constituting a train and respectively have a function of measuring a railway track shape at the present spot of each car in which each unit is installed. In the first embodiment, two railway track shape measurement units, the first railway track shape measurement unit 101 and the second railway track shape measurement unit 102, are provided and each performs measurement at least once, at least two times of measurement are performed in total. The first railway track shape measurement unit 101 outputs information Sg1 indicating a railway track shape measured at the first car to the railway track shape collation unit 106; and the second railway track shape measurement unit 102 outputs information Sg2 indicating a railway track shape measured at the second car to the railway track shape collation unit 106.

Information indicating a railway track shape includes characteristic information of a railway track, such as roughness of a joint in a rail of a railway track, as information indicating a railway track shape in a broad sense in addition to basic information of a railway track, such as a gradient value of a railway track and a curve radius of a railway track. For gradient amount, for example, such a sensor as a leveler that is capable of measuring a pitch angle is used. In the following description, a gradient amount will be taken as an example of a railway track shape; however, the first embodiment is not limited to this and is also applicable to cases where any other railway track shape, such as curve radius or a joint in a rail, is used or cases where a plurality of pieces of information are combined and used. The sensor need not be a leveler. For example, a gyro sensor or an angular velocity sensor may be used or a combination of these items may be used. A state of a car may be measured with a sensor for performing three-dimensional measurement and a gradient amount, a curve radius, and a joint in a rail may be computed. Aside from the foregoing, railway track information may be extracted using information obtained by an optical sensor such as LIDAR (light detection and ranging) or a camera and a railway track shape may be measured using satellite information from GNSS (Global Navigation Satellite System) or the like.

To select a car at which railway track information is to be measured, for example, the head car is taken as a first car in which the first railway track shape measurement unit 101 is installed and the rearmost car is taken as a second car in which the second railway track shape measurement unit 102 is installed. By selecting cars distant from each other, a difference is prone to be produced in measured railway track information; therefore, even when accurate estimation cannot be performed with railway track information from only one car, the accurateness of position estimation is expected to be enhanced by using railway track information from two cars. A car at which railway track information cannot be accurately measured because of influence of a suspension or the like may be excluded from targets of selection of a car at which railway track information is measured.

A number of cars at which a railway track shape is measured is at least two including the head car and the rearmost car among a plurality of cars but the number need not be two and may be three or more. In addition to cases where a railway track shape measurement unit is individually installed in any of cars, cases where a railway track shape measurement unit is not individually installed in any of cars are also acceptable. For example, a sensor may be installed in cars to measure the states of the cars and information indicating the measured states of the cars may be analyzed to compute a railway track shape at each car in the railway track shape measurement unit.

The position measurement unit 103 has a function of measuring a position of a train on a railway track. Since a position computed here can contain an error or the like, the position is an approximate position (hereafter, also referred to as "approximated position") of a train. Examples of a means for measuring an approximated position of a train include methods in which a position computed from an integrated value of a speed meter of a train or inter-station information of a train is used. The position measurement unit 103 is capable of measuring an approximated position of a train or an approximated position of each car based on information of the cars constituting the train. The position measurement unit 103 outputs information Sg3 indicating an approximated position of a train or an approximated position of each car to the section determination unit 105. A means for measuring an approximated position is not limited to a speed meter. For example, an approximated position may be acquired by picking up an image of a railway track and an object near a railway track and matching an image of a railway track and an environment around the railway track picked up using LIDAR and a camera. An approximated position can be continuously measured during running of a train and an approximated position can be computed when the first railway track shape measurement unit 101 and the second railway track shape measurement unit 102 perform measurement.

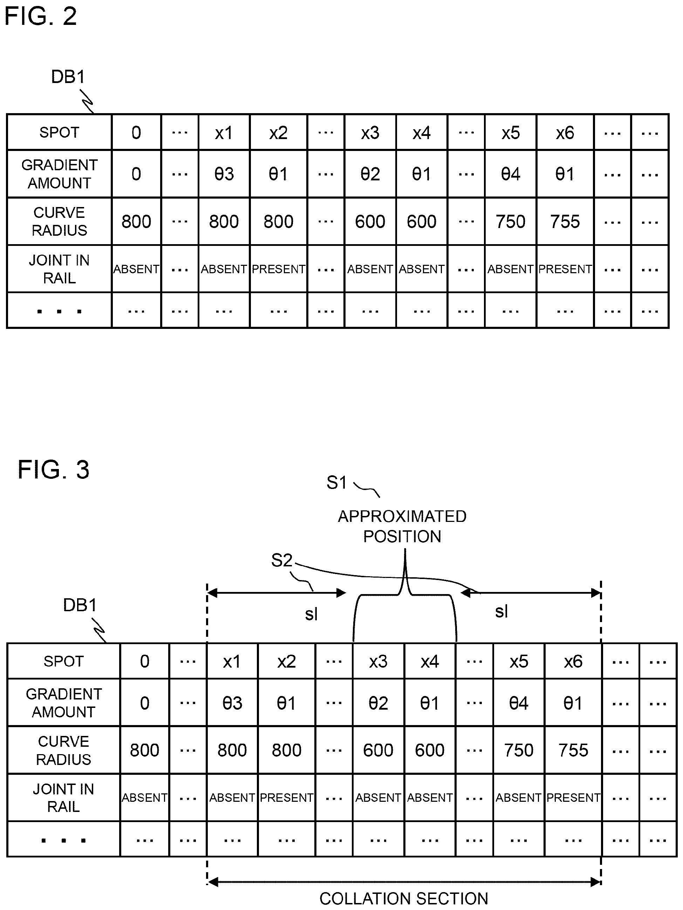

The railway track information storage unit 104 has a function of storing a railway track information database containing a railway track shape at each spot in a railway track. FIG. 2 is a drawing illustrating an example of a railway track information database DB1. In this example, the railway track information database DB1 contains spot, gradient amount at each spot, curve radius, presence/absence of joint in rail as items. In this example, gradient amount, curve radius, presence/absence of joint in rail are included in railway track shape; however, the information in the database is not limited to these items and information indicating any other railway track shape may be stored. Information can also be stored as information indicating a railway track shape in a broad sense as long as the information indicates a state of a railway track. The railway track information storage unit 104 outputs information Sg4 indicating a railway track information database to the section determination unit 105. Alternatively, the present embodiment may be so configured that the section determination unit 105 refers to a railway track shape database stored in the railway track information storage unit 104 as appropriate.

When even at an identical spot, a value in a railway track information database differs from car to car, a database for each car may be respectively held and used. An example of a possible cause of a difference in database from car to car is a difference in measurement result caused by an individual difference in car suspension.

A railway track information database may be generated not only from a measurement result at a single train but also by combining measurement results at a plurality of trains. For example, a position estimation system according to the first embodiment may be applied to a train operation control system and railway track shapes and approximated positions measured at a plurality of trains may be reflected in a railway track information database.

The section determination unit 105 determines a collation section in a railway track information database based on a position measured by the first railway track shape measurement unit 101 and the second railway track shape measurement unit 102. The section determination unit 105 has a function of determining a section (hereafter, referred to as "collation section") used for collation of railway track shape in information Sg4 indicating data of railway track information at each spot outputted from the railway track information storage unit 104, using an approximated position outputted from the position measurement unit 103. A collation section can be determined in a section before or after an approximated position. The section lengths before and after an approximated position are determined according to performance requirements, such as accuracy of position estimation and a time required for estimation. The section determination unit 105 outputs information Sg5 indicating a determined collation section to the railway track shape collation unit 106.

A detailed description will be given to a method for determining a collation section. FIG. 3 is a drawing schematically explaining a method for determining a collation section.

A case where the position measurement unit 103 measures an approximated position of the first car as spot x4 and an approximated position of the second car as spot x3 will be taken as an example. At Step S1, when receiving information Sg3 indicating an approximated position of each car, the section determination unit 105 retrieves a point corresponding to the approximated position from among spots in a railway track information database. As an example of a retrieval method is a linear algorithm method in which a database is sequentially searched from the beginning and any other method may be selected as appropriate.

The railway track information database DB1 shown in FIG. 3 has discrete values. Meanwhile, a car approximated position takes a consecutive value and simple retrieval may be not implemented. In this case, the section determination unit 105 retrieves a spot closest to a position measured by the position measurement unit from among spots contained in the railway track information database DB1. For example, a difference between a spot in the railway track information database and a spot indicated by an approximated position can be taken and the spot smallest in difference can be taken as a retrieval result at Step S1.

At Step S2, the section determination unit 105 sets a section length s1 before and after a spot retrieved at Step S1 and determines a collation section. When a section length s1 is large, for example, an amount of work of performing subsequent collation processing is increased. Meanwhile, when a section length s1 is small, there is the possibility that collation processing cannot be precisely performed. A section length s1 is set according to the operation of the system.

The railway track shape collation unit 106 has a function of estimating a position of a car by collating a railway track shape of each car at the present spot, outputted from the first railway track shape measurement unit 101 and the second railway track shape measurement unit 102, with a collation section outputted from the section determination unit 105. For example, in a collation section, the railway track shape collation unit 106 collates a railway track shape (hereafter, also referred to as "DB railway track shape") contained in a railway track shape database with a railway track shape (hereafter, also referred to as "measured railway track shape") measured by the first railway track shape measurement unit 101 and the second railway track shape measurement unit 102 and estimates a spot on the railway track corresponding to the collated railway track shape as a position of the train on the railway track.

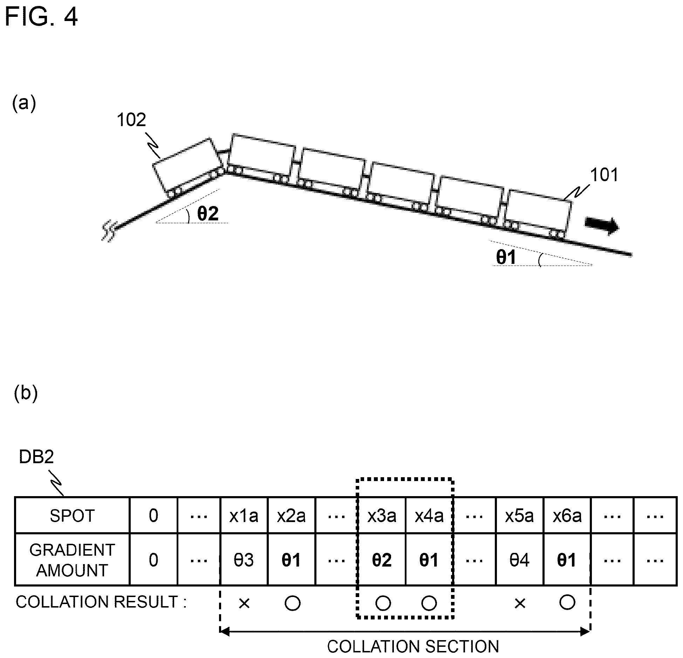

FIG. 4 is a drawing showing a method for estimating a position of a train using a railway track shape at the present spot of the train and a database of a collation section. The first railway track shape measurement unit 101 is provided in the head car as a first car and the second railway track shape measurement unit 102 is provided in the rearmost car as a second car. The arrow indicates the running direction of cars. (a) of FIG. 4 shows how a railway track shape is measured. As shown here, the first railway track shape measurement unit 101 measures gradient amount θ1 and the second railway track shape measurement unit 102 measures gradient amount θ2.

(b) of FIG. 4 shows how database collation is performed. The drawing shows an example in which a collation section is set within a range from spot x1a to spot x6a in the database DB2 and a gradient amount by the first railway track shape measurement unit 101 is θ1 and a gradient amount by the second railway track shape measurement unit 102 is θ2.

The railway track information database DB2 shown in (b) of FIG. 4 are discretely set, like spots x1a, x2a, ... A spacing between spots is based on a train length, which is a length between the first car and the second car. Such a railway track information database DB2 based on a train length is generated at the section determination unit 105 based on information Sg3 indicating an approximated position of each car at the position measurement unit 103 and information Sg4 indicating the railway track information database DB1. For example, the section determination unit 105 may extract data based on a train quantity from the railway track information database DB1 and take the data as a database or may alter a data section in the railway track information database DB1.

First, in a collation section, a spot equivalent to gradient amount θ1 in the first railway track shape measurement unit 101 is retrieved. It was found from a collation result that gradient amount θ1 applies at spots x2a, x3a, x4a, and x6a. Subsequently, in a collation section, a spot equivalent to gradient amount θ2 in the second railway track shape measurement unit 102 is retrieved. As indicated by a collation result, it was found that spot x3a is equivalent to gradient amount θ2. As a result, it is found that in a collation section, positions equivalent to gradient amounts θ1 and θ2 are spots x3a and x4a and it is estimated that the position of the first car is x4a and the position of the second car is x3a. A position can be estimated from a railway track shape and a collation section by this method. Information Sg6 indicating the estimated position is outputted to the car control unit 107.

In the above-mentioned collation method, even when values do not completely agree with each other between a railway track shape and the railway track information database DB2, the values may be considered to agree with each other and permitted and successfully collated within a range set in advance. The above-mentioned permissible range may be set according to position estimation accuracy. For example, in collation processing, a difference between a gradient amount in the railway track information database DB2 and a gradient amount measured by the first railway track shape measurement unit 101 and the second railway track shape measurement unit 102 may be taken and when the difference is within a range set in advance, the values may be considered to agree with each other and be successfully collated. A range set in advance can be selected as appropriate according to the situation of system operation.

When a difference is out of the permissible range and values cannot be collated, it is determined that position estimation cannot be performed by the present method; then a position is measured by any other position measurement means or a previous value of position is held.

Further, it is assumed that a measurement value of railway track shape can be caused to fluctuate by car driving operation, such as acceleration and deceleration; therefore, position estimation may be not performed in a section which car driving operation is changed or acceleration/deceleration in changed driving operation may be taken into account for a result of railway track shape measurement. Examples of car driving operation include accelerating operation (powering operation), constant speed operation, coasting operation, and braking operation.

The car control unit 107 has a function of controlling a train using position information Sg6 outputted from the railway track shape collation unit 106. Examples of train control methods include automatic train control device (ATC) and automatic train operation device (ATO).

Above is a description of a configuration of the position estimation system 100 and each component thereof.

### (Flowchart)

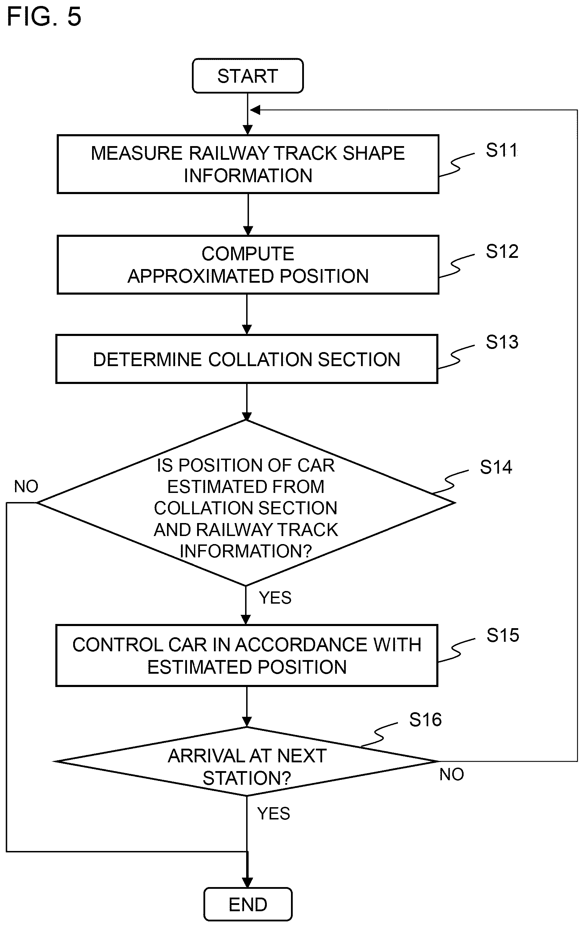

A description will be given to a procedure for estimating a position in a section from departure from a station to arrival at the next station in the first embodiment with reference to FIG. 5. FIG. 5 is a drawing showing a flowchart of position estimation in the first embodiment. Also, after arrival at the next station, the same procedure is performed until arrival at the terminal of the railway route and a description thereof will be omitted.

At Step S11, the first railway track shape measurement unit 101 and the second railway track shape measurement unit 102 measure railway track shape information at the present spot.

At Step S12, the position measurement unit 103 computes an approximated position of a car based on a speed meter and inter-current station information.

At Step S13, the section determination unit 105 determines a collation section using an approximated position of a car outputted from the position measurement unit 103 and a railway track information database of each spot outputted from the railway track information storage unit 104.

At Step S14, the railway track shape collation unit 106 collates the railway track shape of each car at the present spot outputted at Step S11 with a collation section outputted at Step S13 and retrieves a spot corresponding to a collated railway track shape and thereby estimates a position of a car and updates an estimated position of the car. When collation based on a railway track shape at the present spot cannot be performed, it is determined that position estimation by the present method cannot be performed. Causes of infeasibility of railway track shape collation include, in addition to cases where concordance cannot be obtained by railway track shape retrieval at Step S14, cases where railway track information cannot be measured at Step S11, cases where an approximated position cannot be measured at Step S12, cases where a collation section cannot be determined at Step S13, and the like.

At Step S15, a position estimated at Step S14 is outputted to the car control unit 107 and the car control unit 107 controls a car in accordance with the position information.

At Step S16, it is determined whether arrival at the next station has occurred; when arrival has not occurred, the processing returns to Step S11 and when arrival at the next station has occurred, the processing is terminated.

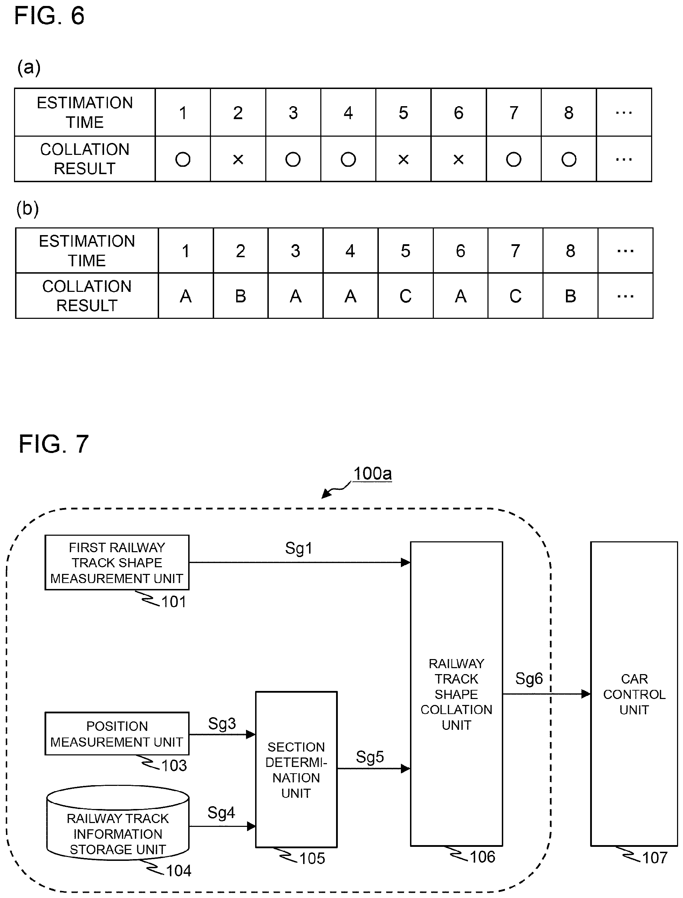

The above-mentioned steps, Step S11 to Step S16, are repeated at predetermined time intervals. FIG. 6 is a drawing showing an example of estimation time when a position is estimated and a result of collation processing. As shown in (a) of FIG. 6, at the first, third, fourth, seventh, and eighth times when estimation is performed, o is filled in a collation result field and indicates that position estimation was appropriately performed. Meanwhile, at the second, fifth, and sixth times, x is filled in a collation result field and indicates that position estimation could not be performed.

(b) of FIG. 6 shows another example of estimation time and a result of collation processing. In this example, A to C are filled in collation result fields. This is evaluation of results of collation processing based on a respective degree of agreement between a spot and railway track information in a collation section in a database and an approximated position and railway track information obtained by the first railway track shape measurement unit 101 and the second railway track shape measurement unit 102 or the position measurement unit 103 obtained as a result of collation. For example, a three-staged evaluation criterion is established for differences between values in a database and measured values; and when a difference is smallest and the accuracy of a position estimation result is high, A is assigned; when a difference is largest and the accuracy of position estimation result is low, C is assigned; and in cases between A and C, B is assigned.

When a collation result cannot be obtained or a result with desired accuracy cannot be obtained at some spot, as shown in (a) and (b) of FIG. 6, data may be interpolated using results at the preceding and subsequent spots to perform position estimation.

Above is a description of a procedure for estimating a position by the method of the present embodiment in a section between departure from a station and arrival at the next station.

### (Working-effects)

As described up to this point, according to the first embodiment, even when a difference in railway track shape is small and matching of railway track shapes is difficult, a position can be accurately estimated by performing measurement of a railway track shape and collation of a railway track information database at a plurality of spots.

In railway tracks, variation in shape may be suppressed sometimes all along the whole length of a line and a plurality of spots similar in shape appear on a railway track on which a train runs. In such a case, just by acquiring and collating railway track shape information at only one car, a shape can be extracted from a wrong spot and this can lead to erroneous collation. By measuring railway track shape information at a plurality of cars and using the information in collation, a position of the train can be accurately estimated.

It would be theoretically possible to collate a railway track shape with respect to all the spots contained in a railway track information database and estimate a position; however, a processing load is increased and it can take much time to estimate a position and this method is not practical. By limiting a collation section in which collation processing is performed in a railway track information database, a processing load can be suppressed and further position estimation can be performed in a timely manner.

A case where a railway track is laid in a largely sloped terrain is assumed. As compared with a flat terrain, in an upslope, more power is required; and in a downslope, appropriate braking is required. By accurately performing position estimation based on a spot and a gradient amount, operations of a power generation device and a braking device of a car, including running speed, can be controlled and a car can be operated in safety.

When a train runs on a curved railway track, control is exercised to lean a car body to enhance a passing speed and improve riding comfort. By accurately performing position estimation based on a spot and a curvature, an amount, timing, and a direction of car body leaning can be accurately computed and a speed and riding comfort can be thereby improved.

When a car passes over a joint in a rail, vibration and noise are produced. Riding comfort is influenced in a car and a surrounding environment is influenced outside a car. By accurately performing position estimation based on a spot and a joint in a rail, vibration damping control can be exercised in a train and production of vibration and noise can be suppressed.

### Second Embodiment

In relation to the second embodiment, a description will be given to a method for chronologically performing measurement of a railway track shape and collation of a database to estimate a position. The same configurations as in the first embodiment will be marked with the same reference signs and a description thereof will be omitted.

In the first embodiment, enhancement of the accuracy of position estimation is implemented by performing measurement of a railway track shape and collation of a database at a plurality of spots; the second embodiment is different from the first embodiment in that the accuracy of position estimation is enhanced by chronologically performing measurement of a railway track shape and collation of a database.

For this reason, while a plurality of cars and sensors for performing measurement of a railway track shape is required in the first embodiment, only one car and sensor for measurement of a railway track shape are acceptable in an entire train in the second embodiment.

FIG. 7 is a drawing illustrating a position estimation system 100a according to the second embodiment. In the position estimation system 100a, railway track information is measured by the first railway track shape measurement unit 101.

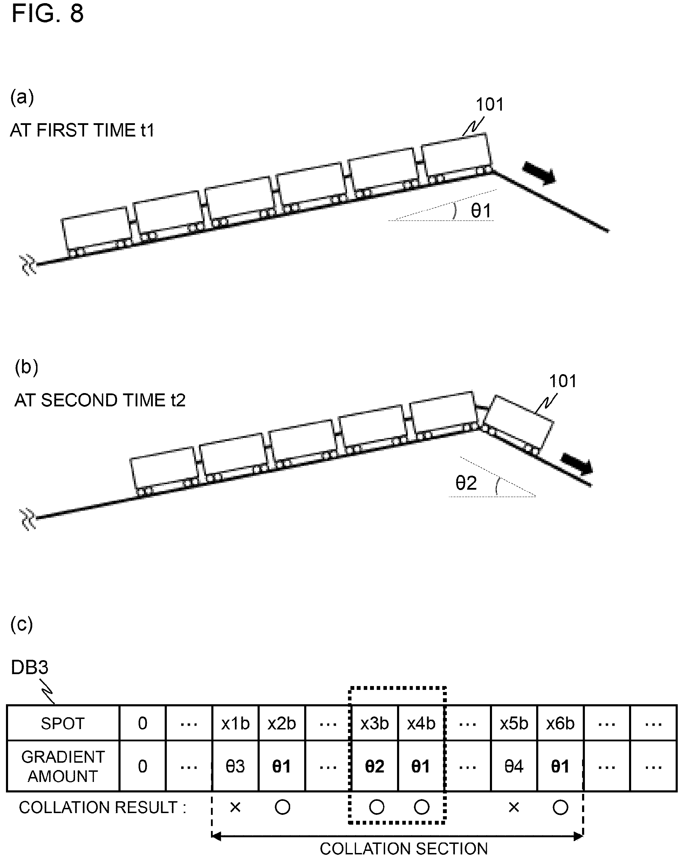

FIG. 8 is a drawing showing a method for chronologically performing measurement of a railway track shape and collation of a database. In this example, the first railway track shape measurement unit 101 is provided in the head car. The first railway track shape measurement unit 101 measures a railway track shape at first time t1 and second time t2. (a) of FIG. 8 is a drawing showing a case where gradient amount θ1 is measured at first time t1 and (b) of FIG. 8 is a drawing showing a case where gradient amount θ2 is measured at second time t2. Further, (c) of FIG. 8 is a drawing showing a concept under which collation processing is performed in a railway track information database DB3. The railway track information database DB3 shown in (c) of FIG. 8 is discretely set, like spots x1b, x2b, ... A spacing between spots is based on a migration length by which a car moves between first time t1 and second time t2. Such setting of the railway track information database DB3 is made at the section determination unit 105 based on information Sg3 indicating an approximated position of each car at the position measurement unit 103.

First, in a collation section, a spot equivalent to gradient amount θ1 at first time t1 is retrieved. As shown by a collation result, it was found that in the railway track information database DB3, gradient amount θ1 applies at spots x2b, x3b, x4b, and x6b. Subsequently, in a collation section, a spot equivalent to gradient amount θ2 at second time t2 is retrieved. As shown by a collation result, it was found that spot x3b in the railway track information database DB3 is equivalent to gradient amount θ2. As a result, it is understood that in a collation section, positions equivalent to gradient amounts θ1 and θ2 are spots x3b and x4b; therefore, it is estimated that a position at first time t1 is x3b and a position at second time t2 is spot x4b. By a method of collating chronological change in measured railway track information mentioned above, a position can be estimated from chronological railway track information and collation section.

In the description of the second embodiment, a number of pieces of chronologically used data is two, first time t1 and second time t2; but the second embodiment is not limited to this and three or more pieces of chronologically used data may be used to perform position estimation.

### (Working-effects)

As described up to this point, according to the second embodiment, by chronologically using a plurality of measurement values to perform measurement of a railway track shape and collation of a database, position estimation can be accurately performed even when a difference in railway track shape is small and matching of railway track shapes is difficult.

### Third Embodiment

In the description of the first embodiment, a railway track information database of an interval based on a train length is used and in the description of the second embodiment, a railway track information database of an interval based on a migration length is used. In either case, a railway track information database has a certain interval; and the third embodiment is different from these embodiments in that a certain interval of a railway track information database is subdivided at a specific spot. The same configurations as in the first embodiment and the second embodiment will be marked with the same reference signs and a description thereof will be omitted.

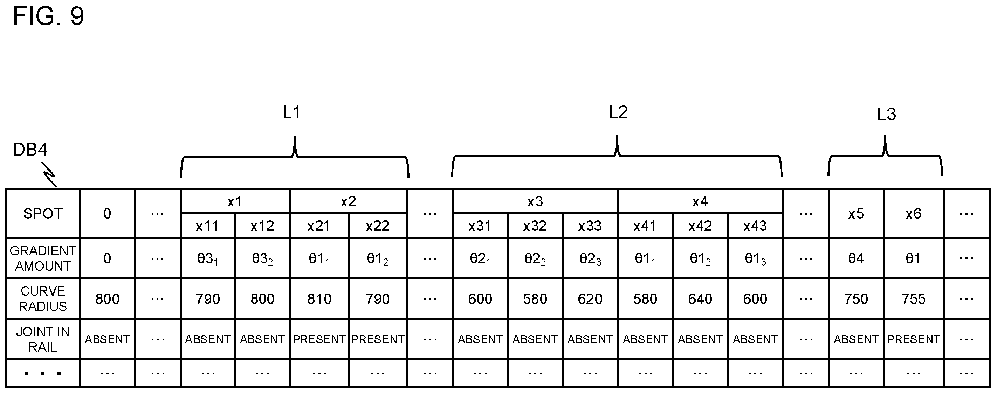

FIG. 9 is a drawing showing an example of a railway track information database DB4 in the third embodiment. The railway track information database DB4 is composed of discrete values and intervals between spots x1, x2, x3, x4, x5, and x6 are equal. In the area L1, spot x1 is subdivided into 1/2, spot x11 and spot x12 and also, with respect to items of gradient amount, radius of curvature, and joint in rail, data corresponding to spot x11 and spot x12 is provided. Spot x2 is also subdivided into spot x21 and spot x22. In the area L2, spot x3 is subdivided into 1/3, spot x31, spot x32, and spot x33 and also, with respect to items of gradient amount, radius of curvature, and joint in rail, data corresponding to spot x31, spot x32, and spot x33 respectively is provided. Spot x4 is also subdivided into spot x41, spot x42, and spot x43.

Collation processing is performed as in the first embodiment and the second embodiment.

### (Working-effects)

While a spot in a railway track information database is inputted as a discrete value, a position obtained by measurement of an approximated position takes a consecutive value. When a railway track information database is collated, it is difficult to attain complete agreement.

In the third embodiment, meanwhile, in the railway track information database DB4, data intervals are subdivided. As a result, a difference between a position obtained by measurement of an approximated position and a spot in the railway track information database DB4 can be made smaller and the accuracy of position estimation can be more enhanced.

When energy-saving operation is performed, for example, variation in railway track shape must be grasped in a timely manner to exercise operation control. By selecting a place where a railway track shape largely varies as a specific spot and subdividing values in a database and storing the subdivided values in advance, variation in railway track shape can be grasped to exercise operation control conforming to the variation in railway track.

### Fourth Embodiment

The fourth embodiment is different from the first embodiment to the third embodiment in that spots and railway track shapes have consecutive data in a railway track information database. In the following description, the same configurations as in the first embodiment will be marked with the same reference signs and a description thereof will be omitted.

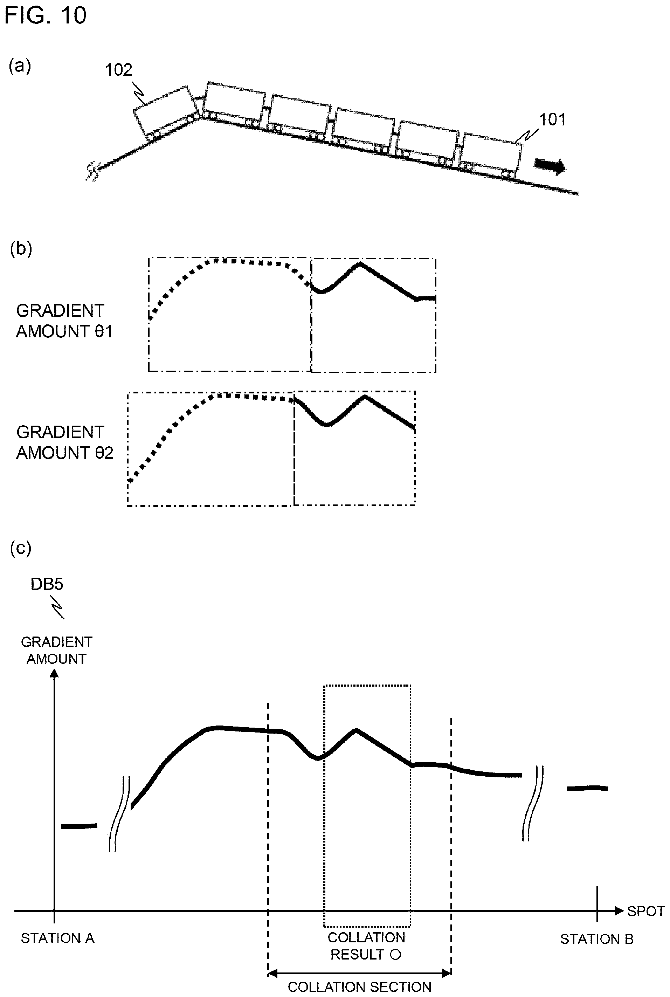

FIG. 10 is a drawing showing a method for performing measurement of a railway track shape and collation of a database when a railway track information database contains consecutive data.

(a) of FIG. 10 is a drawing showing a case where a gradient amount is measured in the fourth embodiment. The first railway track shape measurement unit 101 is provided in the head car and the second railway track shape measurement unit 102 is provided in the rearmost car.

(b) of FIG. 10 is a drawing showing a measured gradient amount. Gradient amount 81 is a gradient amount measured by the first railway track shape measurement unit 101. Gradient amount θ2 is a gradient amount measured by the second railway track shape measurement unit. As shown here, in the fourth embodiment, results of measurement at the railway track shape measurement units also have a consecutive value. For example, measurement can be continuously performed in a running train and measurement may also be performed at a specific spot.

(c) of FIG. 10 is a drawing showing a concept under which collation processing is performed in a railway track information database DB5. As shown here, in the fourth embodiment, the railway track information database DB5 contains a gradient amount having a consecutive value in a railway track between station A and station B. In a collation section, a pattern is detected between a gradient amount in the railway track information database DB5 and gradient amount θ1 and a pattern is detected between the railway track information database DB5 and gradient amount θ2. A position corresponding to a gradient amount collated in either pattern matching is estimated as a position of the train.

The description of the fourth embodiment uses a gradient amount but the fourth embodiment is not limited to this. The fourth embodiment is also applicable to information indicating any other railway track shape. A case where two railway track shape measurement units are used as in the first embodiment but the fourth embodiment is not limited to this. The fourth embodiment is also applicable to a case where three or more railway track shape measurement units are used. The fourth embodiment is also applicable to such chronological collation of a railway track shape as in the second embodiment.

### (Working-effects)

In the fourth embodiment, the railway track information database DB5 contains consecutive railway track shape data. By adopting pattern matching in collation processing, the accuracy of collation processing can be enhanced and as a result, the accuracy of position estimation can be more enhanced.

Up to this point, a description has been given to embodiments of the present disclosure but the present disclosure is not limited to the above-mentioned embodiments and can be variously modified without departing from the subject matter of the present disclosure.

In relation to the present disclosure, the embodiments have been separately described but the individual embodiments can also be combined.

A position estimation system in the present disclosure may also be mounted in a train as an on-board system. A position estimation system in the present disclosure may be adopted for a train operation control system to estimate the positions and control operation of a plurality of trains in a railway track section.

### (Other Aspects)

The present disclosure also includes the following aspects:

### (First Aspect)

A position estimation system includes: a railway track information storage unit that stores a railway track information database containing a railway track shape at each spot in a railway track; a railway track shape measurement unit that measures a railway track shape at least twice in a train running on the railway track; a position measurement unit that measures a position of the train on a railway track; a section determination unit that determines a collation section in the railway track information database based on a position measured by the position measurement unit; and a railway track information collation unit that, in the collation section, collates a DB railway track shape, which is a railway track shape contained in the railway track information database, with a measured railway track shape, which is a railway track shape measured by the railway track shape measurement unit, and estimates a spot on a railway track corresponding to the collated railway track shape as a position of the train on a railway track.

### (Second Aspect)

The position estimation system according to the first aspect, in which the section determination unit retrieves a spot closest to a position measured by the position measurement unit among the spots contained in the railway track information database, sets a predetermined section length before and after the retrieved spot, and takes the section lengths as the collation section.

### (Third Aspect)

The position estimation system according to the first or second aspect, in which the train is composed of a plurality of cars and the railway track shape measurement unit measures the railway track shape in at least two cars of a plurality of the cars.

### (Fourth Aspect)

The position estimation system according to any of the first to third aspects, in which the at least two cars include the head car and the rearmost car of a plurality of the cars.

### (Fifth Aspect)

The position estimation system according to any of the first to fourth aspects, in which the railway track shape measurement unit measures the railway track shape at first time and at second time.

### (Sixth Aspect)

The position estimation system according to any of the first to fifth aspects, in which a gradient amount of the railway track is used as the railway track shape.

### (Seventh Aspect)

The position estimation system according to any of the first to sixth aspects, in which a curve radius of the railway track is used as the railway track shape.

### (Eighth Aspect)

The position estimation system according to any of the first to seventh aspects, in which the presence/absence of roughness of a joint in a rail of the railway track is used as the railway track shape.

### (Ninth Aspect)

The position estimation system according to any of the first to eighth aspects, in which the position measurement unit computes a position of the train based on an integrated value of a speed meter of a train.

### (10th Aspect)

The position estimation system according to any of the first to ninth aspects, in which in the railway track information database, a railway track shape is recorded at certain intervals and the certain interval is subdivided at a specific spot.

### (11th Aspect)

A position estimation method in which a railway track information database containing a railway track shape at each spot in a railway track is used, comprising: a railway track shape measurement step of, in a train running on the railway track, performing measurement of a railway track shape at least twice; a position measurement step of measuring a position of the train on a railway track; a section determination step of determining a collation section in the railway track information database based on a position measured at the position measurement step; and a railway track information collation step of, in the collation section, collating a DB railway track shape, which is a railway track shape contained in the railway track information database, with a measured railway track shape, which is a railway track shape measured at the railway track shape measurement step, and estimating a spot on a railway track corresponding to the collated railway track shape as a position of the train on a railway track.

### List of Reference Signs

100, 100a: position estimation system
101: first railway track shape measurement unit
102: second railway track shape measurement unit
103: position measurement unit
104: railway track information storage unit
105: section determination unit
106: railway track shape collation unit
107: car control unit
DB1, DB2, DB3, DB4, DB5: railway track information database

## Claims

1. A position estimation system comprising:
a railway track information storage unit that stores a railway track information database containing a railway track shape at each spot in a railway track;
a railway track shape measurement unit that, in a train running on the railway track, performs measurement of a railway track shape at least twice;
a position measurement unit that measures a position of the train on a railway track;
a section determination unit that determines a collation section in the railway track information database based on a position measured by the position measurement unit; and
a railway track information collation unit that, in the collation section, collates a DB railway track shape, which is a railway track shape contained in the railway track information database, with a measured railway track shape, which is a railway track shape measured by the railway track shape measurement unit, and estimates a spot on a railway track corresponding to the collated railway track shape as a position of the train on a railway track.

2. The position estimation system according to Claim 1,
wherein the section determination unit retrieves a spot closest to a position measured by the position measurement unit among the spots contained in the railway track information database and sets a predetermined section length before and after the retrieved spot and takes the section lengths as the collation section.

3. The position estimation system according to Claim 1,
wherein the train is composed of a plurality of cars, and
the railway track shape measurement unit measures the railway track shape in at least two cars of a plurality of the cars.

4. The position estimation system according to Claim 3,
wherein at least the two cars include the head car and the rearmost car of a plurality of the cars.

5. The position estimation system according to Claim 1,
wherein the railway track shape measurement unit measures the railway track shape at first time and at second time.

6. The position estimation system according to Claim 1,
wherein a gradient amount of the railway track is used as the railway track shape.

7. The position estimation system according to Claim 1,
wherein a curve radius of the railway track is used as the railway track shape.

8. The position estimation system according to Claim 1,
wherein the presence/absence of roughness of a joint in a rail of the railway track is used as the railway track shape.

9. The position estimation system according to Claim 1,
wherein the position measurement unit computes a position of the train based on an integrated value of a speed meter of a train.

10. The position estimation system according to Claim 1,
wherein in the railway track information database, a railway track shape is recorded at certain intervals and the certain interval is subdivided at a specific spot.

11. A position estimation method that uses a railway track information database containing a railway track shape at each spot in a railway track,
the position estimation method comprising:
a railway track shape measurement step of, in a train running on the railway track, performing measurement of a railway track shape at least twice;
a position measurement step of measuring a position of the train on a railway track;
a section determination step of determining a collation section in the railway track information database based on a position measured at the position measurement step; and
a railway track information collation step of, in the collation section, collating a DB railway track shape, which is a railway track shape contained in the railway track information database, with a measured railway track shape, which is a railway track shape measured at the railway track shape measurement step, and estimating a spot on a railway track corresponding to the collated railway track shape as a position of the train on a railway track.
